# FASCICULE DE BREVET EUROPEEN

(11) **EP 4 091 917 B1**
(45) Date de publication et mention de la délivrance du brevet: **14.02.2024**
(21) Numéro de dépôt: 22173677.0
(22) Date de dépôt: 17.05.2022
(51) Int. Cl.: B62D 25/06, B62D 27/02, B62D 29/04

(54) **PANNEAU DE CARROSSERIE DE VÉHICULE AUTOMOBILE**
KAROSSERIEPANEEL EINES KRAFTFAHRZEUGS
BODY PANEL OF A MOTOR VEHICLE

(30) Priorité: 19.05.2021 FR 2105216
(43) Date de publication de la demande: 23.11.2022
(73) Titulaire: Compagnie Plastic Omnium SE, 69007 Lyon (FR)
(72) Inventeur: BOKSBELD, Marcel, 01150 SAINTE-JULIE (FR)
(74) Mandataire: LLR

(56) Documents cités:
- WO-A1-01/87691
- DE-A1- 10 158 961
- DE-A1-102019 003 247
- FR-A1- 2 877 881

## Description

L'invention concerne les panneaux de carrosserie de véhicule automobile destinés à être fixés sur une caisse en blanc de véhicule automobile.

Certains panneaux de carrosserie, par exemple un panneau de toit, sont destinés à être fixés sur la caisse en blanc d'un véhicule. Certains de ces panneaux peuvent être réalisés en tôle ou en aluminium et fixés sur la caisse en blanc du véhicule en acier. En effet, il est plus simple et économique de réaliser le panneau dans le même matériau que la caisse en blanc, tant du point de vue de la conception que de celui de la fixation entre les deux éléments.

Cependant, il est possible que, pour certaines raisons, telles qu'une nécessité de transparence aux ondes émises par un organe d'émission d'ondes, par exemple de communication de type AM, FM, DAB ou radar (i.e. la capacité d'un matériau traversé par un flux d'ondes incident à transmettre une fraction supérieure à 90% du flux d'ondes le traversant), des contraintes s'appliquent au choix des matériaux servant à réaliser le panneau de carrosserie. Par exemple, il n'est pas possible de réaliser un panneau de carrosserie en tôle ou en aluminium lorsqu'il est destiné à être traversé par des ondes émises et/ou reçues par des antennes présentes sur le véhicule automobile.

Dès lors, il peut être nécessaire de réaliser un panneau de carrosserie en matière plastique, ce dernier étant fixé sur la caisse en blanc d'un véhicule automobile.

Cependant, ce changement de matériaux peut conduire, par exemple si le panneau de carrosserie est réalisé en matière plastique, à obtenir un ensemble caisse en blanc/panneau de carrosserie dans lequel chacun des deux éléments est réalisé dans un matériau ayant un coefficient d'expansion thermique linéaire (ou CLTE pour « *Coefficient of Linear Thermal Expansion* » en anglais) très différents de l'autre. Par exemple, une matière plastique dite « *low CLTE* » a un coefficient d'expansion thermique linéaire trois à quatre fois supérieur à celui de l'acier. On entend par coefficient d'expansion thermique linéaire un paramètre décrivant le changement de longueur, ou dilatation, d'un matériau en fonction de la température dudit matériau.

En effet, ce coefficient est bien plus élevé pour la matière plastique que pour les métaux utilisés habituellement pour la structure de caisse du véhicule, ce qui se traduit par une dilatation bien plus importante de la matière plastique que de l'acier ou de l'aluminium. Ces différences de comportement thermomécaniques provoquent, en cas d'élévation de température, notamment en cas d'exposition à l'ensoleillement, des dilatations différentielles entre les panneaux provoquant des tensions importantes au sein du cordon de colle (voire une perte d'adhésion de la colle). La déformation du cordon de colle peut alors être insuffisante pour absorber ces dilatations différentielles. Cela peut conduire à des déformations du panneau de carrosserie, notamment dans les directions longitudinale et transversale du véhicule automobile (respectivement directions X et Y selon les directions conventionnelles de véhicule automobile) lorsque le panneau est un panneau de toit, panneau très exposé à l'ensoleillement. Cela peut conduire à des défauts esthétiques au niveau de la carrosserie du véhicule (déformation du panneau de carrosserie par exemple). Il est dès lors important d'éviter un gondolement du panneau de carrosserie et aussi de gérer le jeu et affleurement entre les bords panneau de carrosserie et la structure de caisse du véhicule, ces déformations étant générées par la dilatation différentielle. Il ne serait par exemple pas acceptable que la pièce de plus fort coefficient d'expansion thermique linéaire sorte de son domaine de déformation élastique et subisse dès lors des déformations permanentes, même après refroidissement de la pièce.

Pour pallier cela, il est possible de fixer le panneau de carrosserie sur la caisse en blanc du véhicule par l'intermédiaire de fixations autorisant au moins un degré de liberté du panneau de carrosserie par rapport à la caisse en blanc du véhicule automobile, ou dites liaisons flottantes. Il peut par exemple s'agir de fixation par vissage dans des trous oblongs. On peut par exemple citer le document EP 0 860 615 B1 illustrant un exemple d'une telle fixation.

Cependant, ce type de fixation est onéreuse et complexe à mettre en oeuvre. De plus, elles peuvent conduire à des défauts d'étanchéité de l'ensemble formé par le panneau de carrosserie et la caisse en blanc au niveau des différents points de fixation.

Le document FR 2 877 881 A1 divulgue une vitre fixée à un élément de carrosserie par l'intermédiaire d'une couche de colle ainsi que d'un élément viscoélastique.

Ce document divulgue ainsi un panneau de carrosserie selon le préambule de la revendication 1.

L'invention a notamment pour but de fournir un panneau de carrosserie en matière plastique pouvant être fixé de manière simple à la caisse en blanc d'un véhicule tout en évitant l'apparition de défauts esthétiques tels que décrits auparavant.

A cet effet l'invention a pour objet un panneau de carrosserie de véhicule automobile comprenant :
- un corps principal réalisé en matière plastique et dimensionné pour être collé sur une structure de carrosserie de véhicule automobile, et
- au moins un cordon de colle agencé pour recevoir un second cordon de colle, le cordon de colle étant réalisé dans un matériau plus souple que celui formant le corps principal.

Ainsi, on obtient un panneau de carrosserie comprenant un cordon de colle destiné à servir du support à un second cordon de colle. De plus, ce cordon de colle est réalisé dans un matériau plus souple que le panneau de carrosserie.

Par conséquent, ce cordon de colle a la capacité de se déformer lors d'une dilatation thermique du panneau de carrosserie (et donc lors de l'application d'une contrainte de cisaillement sur le cordon de colle) afin d'éviter que ce dernier ne se gondole comme c'est le cas avec une fixation n'autorisant pas un déplacement relatif du panneau de carrosserie par rapport à une structure de carrosserie, par exemple la caisse en blanc du véhicule.

De plus, le cordon de colle forme une « cale d'épaisseur » sur laquelle un second cordon de colle peut être déposé, ce qui permet de fixer le panneau de carrosserie sur la structure de carrosserie en allant chercher un point d'appui plus profond ou de compenser une variation locale d'espacement entre le panneau de carrosserie et la structure de carrosserie. Cela permet d'optimiser le positionnement du panneau de carrosserie par rapport à la structure de carrosserie au niveau de l'espace séparant ces derniers (par exemple dans une direction verticale, ou direction Z du véhicule, lorsqu'il s'agit d'un panneau de toit).

Suivant l'invention, le cordon de colle comprend une âme configurée pour assouplir le premier cordon de colle. Cela permet d'amplifier la souplesse de cette dernière lors d'une dilatation du panneau de carrosserie.

Suivant d'autres caractéristiques optionnelles du panneau de carrosserie prises seules ou en combinaison :
- l'âme comprend une matière plus souple que celle formant le reste cordon de colle. Une âme plus souple que le reste du cordon de colle va permettre à ce dernier de pouvoir se déformer encore plus ;
- l'âme comprend un matériau plus rigide que celle formant le reste cordon de colle. Une âme plus rigide que le reste du cordon de colle va permettre de doubler la matière la plus souple (i.e. le reste du cordon de colle) qui va être présente de part et d'autre de cette âme plus rigide, ce qui va augmenter sa tolérance à la dilatation. De plus, l'âme plus rigide que le reste du cordon de colle contribue à la création de la cale d'épaisseur mentionnée plus haut ;
- l'âme est une âme creuse. Une âme creuse va permettre à ce dernier de pouvoir se déformer encore plus ;
- le cordon de colle a une épaisseur supérieure ou égale à 5 millimètres, de préférence comprise entre 5 millimètres et 20 millimètres. Ces valeurs d'épaisseur garantissent une souplesse optimale de la piste de collage et contribue à former la cale d'épaisseur mentionnée ci-dessus ;
- le cordon de colle est placé en périphérie du corps principal. Il est dès lors placé au plus près de la zone au niveau de laquelle la différence de dilatation entre le panneau de carrosserie et la structure de carrosserie est importante ;
- le cordon de colle forme une boucle fermée. Il permet dès lors d'assurer une étanchéité de la zone du panneau de carrosserie située à l'intérieur de la boucle fermée ;
- le panneau de carrosserie peut comprendre plusieurs cordons de colle dont au moins un est positionné plus au centre du panneau de carrosserie que le ou les autres cordons de colle, par exemple au centre du panneau de carrosserie. Cela permet, en plus de l'accompagnement de la dilatation du panneau de carrosserie, d'éviter que ce dernier ne se bombe par rapport à la structure de véhicule en partie plus centrale ;
- le cordon de colle est un cordon de colle à base de polyuréthane. Il s'agit d'une base idéale pour une telle application ;
- le panneau de carrosserie étant un panneau de toit de véhicule automobile.

L'invention a également un procédé de fabrication d'un panneau de carrosserie selon l'invention, le procédé comprenant les caractéristiques suivantes :
- moulage du corps principal,
- dépose du cordon de colle sur une face du corps principal.

De préférence le cordon de colle est déposé au robot par une buse à la surface du corps principal.

Le cordon de colle peut également durcir avant dépose d'un second cordon de colle.

### Brève description des figures

L'invention sera mieux comprise à la lecture de la description qui va suivre donnée uniquement à titre d'exemple et faite en se référant aux dessins annexés dans lesquels
[Fig. 1] la figure 1 est une vue en perspective d'un panneau de carrosserie selon l'invention,
[Fig. 2] la figure 2 est une vue en perspective d'un panneau de carrosserie selon l'invention sur lequel une seconde piste de collage est déposée,
[Fig. 3] la figure 3 est une vue rapprochée de la portion encadrée sur la figure 2 ;
[Fig. 4] la figure 4 est une vue en coupe selon le plan de coupe I-I du panneau de carrosserie selon la figure 1 ;
[Fig. 5] la figure 5 est une vue en coupe selon le plan de coupe II-II du panneau de carrosserie selon la figure 2 ; et
[Fig. 6] la figure 6 est une vue en coupe d'une partie d'un panneau de carrosserie selon l'invention monté sur une caisse en blanc de véhicule automobile.

Dans la description qui va suivre, les directions mentionnées telles que la direction longitudinale X, la direction transversale Y ou encore la direction verticale Z font référence aux directions utilisées pour un véhicule automobile.

Les figures illustrent un exemple de panneau de carrosserie étant un panneau de toit. Bien évidemment, et hormis les exemples spécifiques à un panneau de toit, le contenu de la description s'applique à tout panneau de carrosserie dimensionné pour être collé sur une caisse en blanc de véhicule automobile.

### Description détaillée

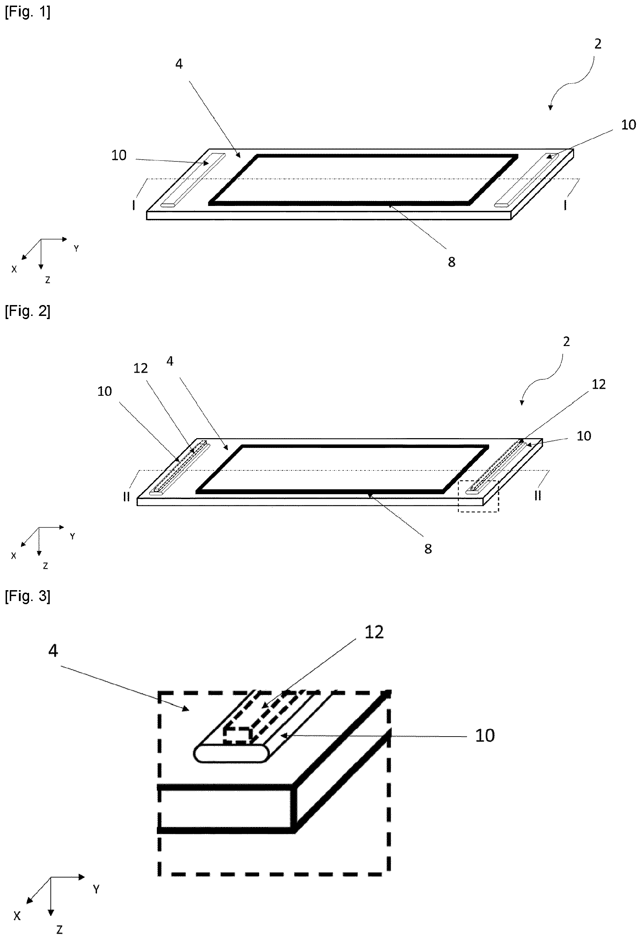

On se réfère désormais à la figure 1 illustrant un panneau de carrosserie 2. Il comprend un corps principal 4 réalisé en matière plastique, de préférence en matière thermoplastique. Un tel corps principal 4 est par exemple réalisé par un moulage en injection. Il pourrait également être réalisé par thermoformage.

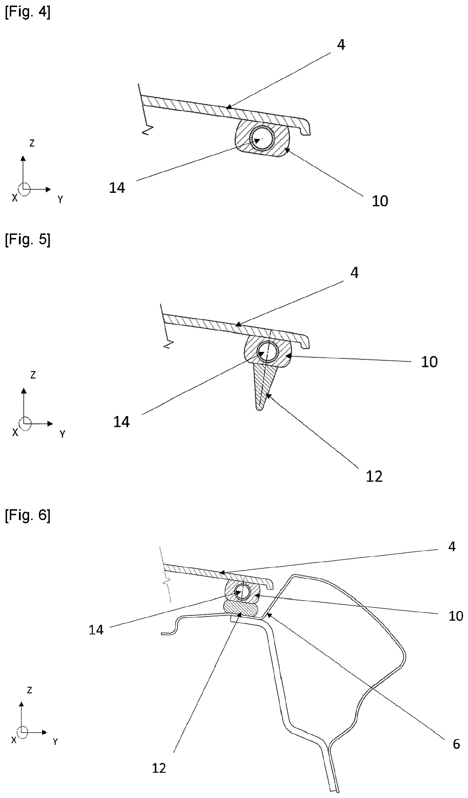

Le corps principal 4 est dimensionné pour être collé sur une structure de carrosserie 6 de véhicule automobile (comme illustré sur la figure 5), comme la caisse en blanc. Par exemple, et s'il s'agit d'un panneau de toit, le corps principal 4 étant dimensionné pour être collé dans un renfoncement de la face supérieure de la structure de carrosserie 6 tout en laissant subsister un jeu entre le bord du corps principal 4 et celui du renfoncement de la structure de carrosserie 6. Il est également possible de dimensionner le panneau de carrosserie 2 pour qu'il soit rapporté sur une pièce de véhicule autre, par exemple élément structurel de carrosserie réalisé dans un matériau ayant un coefficient d'expansion thermique linéaire moins élevé que celui du panneau de carrosserie 2, comme par exemple un cadre de porte latérale ou une structure de capot (tout ce qui s'applique ensuite à une caisse en blanc pourrait s'appliquer à un plus grand panneau de carrosserie).

Il est possible que le corps principal 4 en matière plastique soit utilisé pour recouvrir une cavité réalisée dans la structure de carrosserie 6, la structure de carrosserie 6 étant destinée à recevoir un dispositif d'émission et/ou de réception d'ondes tel qu'un radar, un lidar, un dispositif d'antennes ou encore une caméra. Cela permet de protéger ces dispositifs sans pour autant gêner le passage des ondes émises et/ou reçues par ces derniers. Le panneau de carrosserie 2 peut à cet effet comprendre, sur la face du corps principal 4 destinée à être en regard de la structure de carrosserie 6, un joint d'étanchéité 8 permettant de prévenir l'entrée d'eau dans ladite cavité. Un joint d'étanchéité peut bien évidemment être utile même en cas d'absence de cavité afin d'éviter l'infiltration d'eau entre le panneau de carrosserie 2 et la structure de carrosserie 6.

Afin de pouvoir autoriser une déformation relative du panneau de carrosserie 2 par rapport à la structure de carrosserie 6 réalisée classiquement en tôle ou en aluminium, ce dernier comprend un cordon de colle 10 agencé pour recevoir un second cordon de colle 12 (illustrée sur la figure 2), le cordon de colle 10 étant réalisé dans un matériau plus souple que celui formant le corps principal 4.

Ce cordon de colle 10 étant réalisé dans un matériau plus souple que celui du corps principal 4, il peut se déformer lors d'une dilatation thermique de ce dernier et ainsi éviter un gondolement du panneau de carrosserie 4. De plus, le cordon de colle 10 est destiné à recevoir un second cordon de colle 12, par exemple pouvant être réalisé en polyuréthane tout comme le premier cordon de colle 10, ou dans toute autre matière ayant une compatibilité chimique en adhésion surfacique avec le polyuréthane. L'empilement des deux cordons de colle permet d'accompagner la dilatation du panneau de carrosserie 4 en augmentant la capacité de déformation du cordon de colle total (composé du cordon de colle 10 et du second cordon de colle 12) afin d'éviter ou de limiter un gondolement de ce dernier et gérer le jeu périphérique entre lui et la caisse en blanc 6. Par exemple, et dans le cas d'un panneau de toit, les cordons de colle subissent des contraintes de cisaillement dans les directions longitudinale X et transversale Y qu'elles sont en mesure de supporter du fait de leur flexibilité.

De plus, et grâce à un empilement de deux cordons de colle 10 et 12, il est possible de fixer le panneau de carrosserie 4 sur des points de fixation plus profonds de la structure de carrosserie 6 et ainsi d'ajuster l'éloignement entre ces deux éléments (par exemple dans la direction verticale Z si le panneau de carrosserie 4 est un panneau de toit).

Le cordon de colle 10 comprend une âme 14 configurée pour assouplir le cordon de colle. Cette dernière accentue la capacité de déformation des moyens de collage du panneau de carrosserie 4 à la caisse en blanc 6.

Il peut par exemple s'agir d'une âme 14 creuse. L'absence de matière plastique au coeur du cordon de colle 10 permet d'accentuer la capacité de déformation de ce dernier.

Alternativement, l'âme 14 du cordon de colle 10 peut être formée par une matière plus souple que le reste du cordon de colle 10, par exemple en polyuréthane moins dense, dans un matériau moussé ou une mèche de fibres. La présence d'une matière plus souple au coeur du cordon de colle 10 permet à ce dernier de se déformer de manière plus importante.

Alternativement, il est possible que la matière formant l'âme 14 du cordon de colle 10 soit formée par une matière plus rigide que le reste du cordon de colle 10. Cela permet, comme expliqué plus haut, de répartir la matière la plus souple (i.e. le reste du cordon de colle) en deux segments séparés par une matière plus rigide. La création de ces deux segments permet d'augmenter la capacité de déformation du cordon de colle 10. Elle contribue également, et comme expliqué plus haut, à créer la cale d'épaisseur mentionnée auparavant. L'âme 14 demeure néanmoins plus souple que le panneau de carrosserie.

La présence d'une âme 14 creuse ou comprenant une matière différente de celle formant le reste du cordon de colle 10 peut permettre à ce dernier de durcir, par exemple en réticulant, plus rapidement. L'âme 14 et le cordon de colle 10 peuvent être disposés simultanément par un système de buses concentriques.

Le cordon de colle 10 peut être d'une épaisseur supérieure ou égale à 5 millimètres, de préférence comprise entre 5 et 20 millimètres. Cette plage d'épaisseur garantit une souplesse optimale du cordon de colle 10. Si le second cordon de colle 12 respecte la même condition, on obtient un assemblage d'une épaisseur pouvant être supérieure à 10 millimètres (ce qui est intéressant pour moduler l'espacement entre la structure de carrosserie 6 et le panneau de carrosserie 2) tout en étant composé de deux cordons de colle souples. Cette épaisseur pourrait être combinée avec une largeur du cordon de colle 10, un module d'Young et un allongement à la rupture adéquats pour obtenir la souplesse requise.

De préférence, le cordon de colle 10 est placé en périphérie du corps principal 4 (en tout ou partie de sa périphérie). En effet, il s'agit de la zone au niveau de laquelle il est nécessaire de gérer la dilatation thermique différentielle entre le panneau de carrosserie 2 et la structure de carrosserie 6 (la dilatation différentielle entre le panneau de carrosserie 2 et la structure de carrosserie 6 est maximale en périphérie du panneau de carrosserie 2, en particulier au niveau du/des bord(s) situé(s) aux extrémités du panneau de carrosserie 2 selon sa plus grande dimension). Il peut de préférence s'agir de la périphérie d'un panneau de toit, une caisse en blanc comprenant un espacement tout autour du panneau de toit autorisant une dilatation de ce dernier. Dans ce cas, la combinaison de cet espace avec le positionnement de la piste de collage 10 à la périphérie du panneau de toit assure une possibilité de dilatation de ce dernier tout en évitant un gondolement lors de cette dilatation. Ce positionnement du cordon de colle 10 n'est pas obligatoire et peut être guidé par la volonté de réaliser la fixation du panneau de carrosserie 2 à la structure de carrosserie 6 dans une ou des zones spécifiques autres que la périphérie du panneau de carrosserie 2.

Le cordon de colle 10 peut être déposé à certains endroits spécifiques, comme cela est illustré sur les figures 1 et 2 (positionnement en deux tronçons à la périphérie du corps principal 4) ou former une boucle fermée (non représentée). Cette boucle peut par exemple être réalisée sur toute la périphérie du corps principal 4. L'avantage de la réalisation d'une boucle fermée réside dans le fait que cette dernière peut former simultanément un joint d'étanchéité évitant l'infiltration d'eau entre le panneau de carrosserie 2 et la structure de carrosserie 6, a *fortiori* si elle est réalisée à la périphérie du corps principal 4.

Il est possible de déposer plusieurs cordons de colle dont au moins un est positionné plus au centre du panneau de carrosserie 2 que le ou les autres (qui pourrait être la boucle fermée ou tout autre cordon de colle), voire même au centre du panneau de carrosserie. Un tel cordon de colle supplémentaire peut permettre :
- de créer une cale d'épaisseur et ce pour les raisons évoquées précédemment,
- soutenir le panneau de carrosserie 2 dans une direction perpendiculaire à la direction principale dans laquelle il s'étend (par exemple de la soutenir dans la direction verticale Z s'il s'agit d'un panneau de toit) afin d'éviter des problèmes vibratoires/sonores et afin de limiter un bombement du panneau de carrosserie 2, tout en évitant la mise en place d'une liaison trop rigide entre le panneau de carrosserie 2 et la structure de carrosserie 6 (on peut laisser le panneau de carrosserie 2 se bomber légèrement afin de mieux répartir son expansion thermique sur toute sa surface et éviter les concentrations de contraintes mécaniques et gondolements résultants).

En tout état de cause, le positionnement du ou des cordons de colle 10 est effectué afin d'apporter des bénéfices non seulement au niveau de l'accompagnement de la dilatation thermique du panneau de carrosserie mais peut également permettre d'apporter des bénéfices en ce qui concerne les points listés ci-dessus.

Le cordon de colle 10 est réalisé de manière classique à l'aide d'un matériau à base de polyuréthane. Il peut par exemple s'agir d'un mastic PU 1K ou de PU 2K. Ce dernier présente l'avantage, comme nous le verrons par la suite, de polymériser à l'air libre et à température ambiante et de garantir, dans le cas d'un cordon de colle 10 formant une boucle fermée, une étanchéité de la zone souhaitée.

Concernant le procédé de fabrication du panneau de carrosserie 2, la première étape de ce dernier réside dans le moulage du corps principal 4. Il peut s'agir de manière classique d'un moulage par injection dans le cas où le corps principal est réalisé dans une matière thermoplastique.

Une fois que le corps principal 4 est moulé, étape potentiellement suivie d'une étape de mise en peinture ou non, par exemple en fonction des exigences d'un client, la seconde étape consiste dans le dépôt du cordon de colle 10. Ce dernier, par exemple constitué de mastic PU 1K, peut être déposé à un ou plusieurs endroits de la surface du corps principal 4, de manière continue ou non, par un robot équipé d'une buse de distribution dont l'ouverture de sortie donne les dimensions du cordon de colle 10. Il est également possible que l'étape de mise en peinture soit réalisée après dépose du cordon de colle 10.

Suite à la dépose de la piste de collage 10, le panneau de carrosserie 2 est désormais terminé et peut être conditionné pour un transport. La piste de collage 10 peut refroidir et durcir, par exemple par réticulation à l'air libre et à température ambiante si le matériau qui la forme permet une telle réticulation. Sinon, une étape de réticulation, par exemple en chauffant localement la piste de collage 10, est nécessaire. La réticulation peut aussi se finaliser pendant le transport ou stockage précédent sa mise en oeuvre finale sur le véhicule, c'est-à dire dès que la matière a assez réticulée pour être manipulable sans risque de l'endommager : ainsi on gagne en temps de cycle de production sans devoir attente une réticulation complète.

Lors du montage du panneau de carrosserie 2 sur la structure de carrosserie 6 le second codon de colle 12 peut être déposé sur le cordon de colle 10 (voir figures 2 et 5). Il est préférable, pour assurer une bonne adhésion entre les deux cordons de colle 10 et 12, que ces derniers soient réalisés à partir de matière ayant la même base, par exemple une base polyuréthane. Le second cordon de colle pourrait par exemple être formé de mastic PU 1K également (utilisé classiquement pour le collage de pare-brise). Cela permet d'assurer une compatibilité chimique entre les deux cordons de colle 10 et 12.

Une fois que le second cordon de colle 12 est déposé, le panneau de carrosserie 2 peut être fixé par collage sur la structure de carrosserie 6 par compression du second cordon de colle12 contre cette dernière.

La double épaisseur de cordons de colle induit plus de souplesse en cisaillement latéral au niveau du cordon global formé par les deux cordons de colle 10 et 12 pour permettre un déplacement plus important entre le panneau de carrosserie 2 et la structure de carrosserie 6 lors des dilations différentielles, sans que les contraintes mécaniques internes ne dépassent le seuil élastique autorisé par la matière plastique du panneau de carrosserie 2 (i.e. en évitant que le panneau de carrosserie 2 ne se déforme au-delà de son domaine élastique et ne subisse par conséquent une déformation plastique.

### Liste de références

2 : panneau de carrosserie
4 : corps principal
6 : structure de carrosserie
8 : joint d'étanchéité
10 : cordon de colle
12 : second cordon de colle
14 : âme du premier cordon de colle

## Revendications

1. Panneau de carrosserie (2) de véhicule automobile comprenant :
- un corps principal (4) réalisé en matière plastique et dimensionné pour être collé sur une structure de carrosserie (6) de véhicule automobile, et
- au moins un cordon de colle (10) agencé pour recevoir un second cordon de colle (12), le cordon de colle (10) étant réalisé dans un matériau plus souple que celui formant le corps principal (4), **caractérisé en ce que** lequel le cordon de colle (10) comprend une âme (14) configurée pour assouplir le cordon de colle (10).

2. Panneau de carrosserie (2) selon la revendication 1, dans lequel l'âme (14) comprend une matière plus souple que celle formant le reste cordon de colle (10).

3. Panneau de carrosserie (2) selon la revendication 1, dans lequel l'âme (14) comprend une matière plus rigide que celle formant le reste cordon de colle (10).

4. Panneau de carrosserie (2) selon l'une quelconque des revendications précédentes, dans lequel l'âme (14) est une âme creuse.

5. Panneau de carrosserie (2) selon l'une quelconque des revendications précédentes, dans lequel le cordon de colle (10) a une épaisseur supérieure ou égale à 5 millimètres, de préférence comprise entre 5 millimètres et 20 millimètres.

6. Panneau de carrosserie (2) selon l'une quelconque des revendications précédentes, dans lequel le cordon de colle (10) est placée en périphérie du corps principal (4).

7. Panneau de carrosserie (2) selon l'une quelconque des revendications précédentes, dans lequel le cordon de colle (10) forme une boucle fermée.

8. Panneau de carrosserie (2) selon l'une quelconque des revendications précédentes, le panneau de carrosserie (2) comprenant plusieurs cordons de colle dont au moins un est positionné plus au centre du panneau de carrosserie (2) que le ou les autres cordons de colle, par exemple au centre du panneau de carrosserie.

9. Panneau de carrosserie (2) selon l'une quelconque des revendications précédentes, dans lequel le cordon de colle (10) est un cordon de colle à base de polyuréthane.

10. Panneau de carrosserie (2) selon l'une quelconque des revendications précédentes, le panneau de carrosserie (2) étant un panneau de toit de véhicule automobile.

## Patentansprüche

1. Karosserieblech (2) für Kraftfahrzeug, umfassend:
- einen Hauptkörper (4), der aus Kunststoff realisiert und dimensioniert ist, um auf eine Karosseriestruktur (6) eines Kraftfahrzeugs geklebt zu werden, und
- wenigstens einen Klebstoffstrang (10), der angeordnet ist, um einen zweiten Klebstoffstrang (12) zu empfangen, wobei der Klebstoffstrang (10) aus einem Material realisiert ist, das flexibler ist als das, das den Hauptkörper (4) bildet, **dadurch gekennzeichnet, dass** der Klebstoffstrang (10) eine Einlage (14) umfasst, die ausgelegt ist, um den Klebstoffstrang (10) flexibler zu machen.

2. Karosserieblech (2) nach Anspruch 1, wobei die Einlage (14) ein Material enthält, das flexibler ist als das, das den übrigen Klebstoffstrang (10) bildet.

3. Karosserieblech (2) nach Anspruch 1, wobei die Einlage (14) ein Material enthält, das steifer ist als das, das den übrigen Klebstoffstrang (10) bildet.

4. Karosserieblech (2) nach einem der vorhergehenden Ansprüche, wobei die Einlage (14) eine Hohleinlage ist.

5. Karosserieblech (2) nach einem der vorhergehenden Ansprüche, wobei der Klebstoffstrang (10) eine Dicke aufweist, die größer oder gleich 5 Millimeter ist, vorzugsweise zwischen 5 Millimeter und 20 Millimeter beträgt.

6. Karosserieblech (2) nach einem der vorhergehenden Ansprüche, wobei der Klebstoffstrang (10) am Umfang des Hauptkörpers (4) platziert ist.

7. Karosserieblech (2) nach einem der vorhergehenden Ansprüche, wobei der Klebstoffstrang (10) einen geschlossenen Kreis bildet.

8. Karosserieblech (2) nach einem der vorhergehenden Ansprüche, wobei das Karosserieblech (2) mehrere Klebstoffstränge umfasst, von denen wenigstens einer weiter in der Mitte des Karosserieblechs (2) positioniert ist als der oder die anderen Klebstoffstränge, zum Beispiel in der Mitte des Karosserieblechs.

9. Karosserieblech (2) nach einem der vorhergehenden Ansprüche, wobei der Klebstoffstrang (10) ein Klebstoffstrang auf Polyurethanbasis ist.

10. Karosserieblech (2) nach einem der vorhergehenden Ansprüche, wobei das Karosserieblech (2) ein Dachblech eines Kraftfahrzeugs ist.

## Claims

1. Body part (2) of a motor vehicle comprising:
- a main body (4) made of plastic material and sized to be bonded to a motor vehicle body structure (6), and
- at least one bead of glue (10) arranged to receive a second bead of glue (12), the bead of glue (10) being made of a more flexible material than that forming the main body (4), **characterized in that** wherein the bead of glue (10) comprises a core (14) configured to soften the bead of glue (10).

2. Body panel (2) according to claim 1, wherein the core (14) comprises a more flexible material than that forming the rest bead of glue (10).

3. Body panel (2) according to claim 1, wherein the core (14) comprises a more rigid material than that forming the rest bead of glue (10).

4. Body panel (2) according to one of the preceding claims, wherein the core (14) is a hollow core.

5. Body panel (2) according to one of the preceding claims, wherein the bead of glue (10) has a thickness greater than or equal to 5 millimeters, preferably between 5 millimeters and 20 millimeters.

6. Body panel (2) according to one of the preceding claims, wherein the bead of glue (10) is placed on the periphery of the main body (4).

7. Body panel (2) according to one of the preceding claims, wherein the bead of glue (10) forms a closed loop.

8. Body panel (2) according to one of the preceding claims, the body panel (2) comprising several beads of glue, at least one of which is positioned more in the center of the body panel (2) than the other bead(s) of glue, for example in the center of the body panel.

9. Body panel (2) according to one of the preceding claims, wherein the bead of glue (10) is a bead of polyurethane-based glue.

10. Body panel (2) according to one of the preceding claims, the body panel (2) being a motor vehicle roof panel.
